# EUROPEAN PATENT SPECIFICATION

(11) **EP 2 570 307 B1**
(45) Date of publication and mention of the grant of the patent: **14.05.2014**
(21) Application number: 11007423.4
(22) Date of filing: 13.09.2011
(51) Int. Cl.: B60R 21/36

(54) **Pedestrian airbag arrangement**
Fußgängerairbag-Anordnung
Agencement d'airbag pour piétons

(43) Date of publication of application: 20.03.2013
(73) Proprietor: Autoliv Development AB, 447 83 Vårgårda (SE)
(72) Inventor: Haglund, Lennart, 447 32 Vargarda (SE); Rysmo, Erik, 466 95 Sollebrunn (SE)
(74) Representative: Schön, Thilo

(56) References cited:
- GB-A- 2 477 911
- JP-A- 2004 338 554
- JP-A- 2006 219 046
- US-A1- 2008 106 084
- US-A1- 2009 206 581

## Description

This invention relates to a pedestrian airbag arrangement according to the preamble of claim 1.

When a motor vehicle is involved in a head-on collision with a pedestrian, the body and/or head of the pedestrian often strikes the windscreen of the vehicle. This can result in serious injury to the pedestrian, and significant damage to the vehicle.

In order to better protect the pedestrian, it has been proposed to provide a pedestrian airbag which, if vehicle sensors indicate that a relevant collision with a pedestrian is occurring or is likely to occur, inflates to cover a central portion of the windscreen, and/or the left and right A-pillars of the vehicle. Typically, the airbag is stored beneath a rear edge of the vehicle's bonnet, or beneath a cowl which is provided between the base of the windscreen and the rear of the bonnet. The rear of the bonnet may be lifted, by a suitable airbag, piston or other arrangement, to allow sufficient space for the airbag to inflate.

The aim of a pedestrian airbag of this type is to provide an inflated cushion over the windscreen and/or A-pillars of the vehicle, thus cushioning the impact of a pedestrian with these parts of the vehicle.

One potential problem that can occur with the use of airbags of this type is that, once the airbag has been inflated, the driver of the vehicle is hindered to look out of the windscreen. If a vehicle collides with a pedestrian with sufficient force that the pedestrian strikes the windscreen of the vehicle, the vehicle is likely to be travelling at a considerable speed. If a pedestrian airbag inflates while the vehicle is travelling at speed, and subsequently obscures the driver's view for a long period of time, the result may be that the driver fails to avoid one or more further objects or hazards before bringing the vehicle to a complete stop.

One solution to this problem is presented in the generic JP 2006219046. This document discloses a pedestrian air-bag which has a pair of straps, which are attached to upper left and right corners of the air-bag. As the air-bag inflates the straps are drawn from a reel whereat tensioning a spring being connected to the reel such that the spring is stressed while the airbag deploys. A locking device prevents the reel from turning into the unloading direction of the spring. The locking device can be brought into an unlocking state by means of a manually activated trigger. After manually activating the trigger, the deflating airbag is drawn from the windscreen allowing the driver to see clearly out of the windscreen again.

The problem of the solution presented in this document is, that usually the driver who is involved in a accident is too busy or too confused to operate the trigger in an early stage of the accident where it would be necessary.

It is an object of the present invention to provide an improved pedestrian airbag arrangement of the generic type. Especially it is an object of the invention to provide a retractor which starts automatically with the retraction of the airbag when the airbag has reached a pre-determined position.

The airbag arrangement comprises an airbag covering at least a part of the windscreen and/or at least a part of at least one A-pillar of the vehicle when in deployed state, an inflator being in fluid connection to said airbag, a retractor for retracting said airbag, said retractor comprising a spool and a spring element being connected to said spool, and a flexible pull element having two ends with the first end being connected to the airbag and the second end being connected to the spool, wherein in the non-deployed state of the airbag a part of the pull element is wound onto the spool, such that the spool is rotated by the unwinding pull element when the airbag deploys whereby loading the spring element, and wherein the pull element pulls away the airbag from the windscreen and/or the at least one A-pillar when the pull element is rewound onto the spool because of the force of the spring element.

According to the invention, the spool has at least two sections with a first section having a larger diameter than the second section. The pull element is initially wound onto the spool in such a way that the unwinding on deployment starts a the first section and that after a predetermined unwinding length the pull element passes over to the second section of the spool so that the force applied to the pull element rises.

When the pull element - usually a strap or similar - unwinds from the spool it loads the spring element being connected to the spool. Because during this unwinding the pull element is in connection to the first section having a larger diameter, the force acting on the pull element are rather small due to simple lever principles. So, the pull element exerts only weak forces to the airbag during its deployment and the airbag can deploy nearly "normally" as if no retractor was present. After a predetermined length of the pull element has unwinded from the spool, the pull element passes over to the second section of the spool having a smaller diameter than the first section. Preferably, there is a sharp step between the first and the second section such that the pull element "jumps" from the first section to the second section. When the pull element has passed over to the second section of the spool, the force acting on the pull element because of the loaded spring rises and so does the force applied to the airbag by the pull element. This raised force is strong enough to retract the airbag whereby the pull element is wound onto the second section of the spool by the force of the unloading spring. The spring is preferably a constant force spring.

One sees that the retractor according to the invention works completely automatically and passively. This makes the pedestrian airbag arrangement safe for the occupant, reliable, and cost effective regarding the production and the mounting.

In order achieve a controlled unwinding from the first section, a guiding means is provided in a preferred embodiment. This guiding means can especially be constituted by a screw extending coaxially from the first section of the spool. This screw guides the unwinding pull element towards the second section.

The invention will now be described by ways of preferred embodiments in view of the accompanying figures. The figures show:
- Figure 1a:: The front of a passenger car with a pedestrian airbag arrangement in a strongly diagrammed sectional view in a resting state of the pedestrian airbag arrangement,
- Figure 1b:: the detail D1 in Figure 1 a,
- Figure 1c:: a sectional view taken along the line A-A in Figure 1b,
- Figure 2a:: what is shown in Figure 1a in an early deployment state of the air-bag,
- Figure 2b:: what is shown in Figure 1b in the deployment state of Figure 2a,
- Figure 2c:: what is shown in Figure 1c in the deployment state of Figure 2a,
- Figure 3a:: what is shown in Figure 1a when the airbag is fully deployed,
- Figure 3b:: what is shown in Figure 1b in the deployment state of Figure 2a,
- Figure 3c:: what is shown in Figure 1c in the deployment state of Figure 2a,
- Figure 4a:: what is shown in Figure 1a when the airbag has been retracted,
- Figure 4b:: what is shown in Figure 1b in the retracted state of the airbag of Figure 4a,
- Figure 4c:: what is shown in Figure 1c in the retracted state of the airbag of Figure 4a,
- Figure 5:: an alternative and preferred embodiment of a spool of a retractor in a diagrammatic representation according to Figure 1b,
- Figure 6:: a complete retractor in an exploded view,
- Figure 7:: the retractor of Figure 6 in an assembled state, and
- Figure 8:: the retractor of Figure 7 in a cut view.

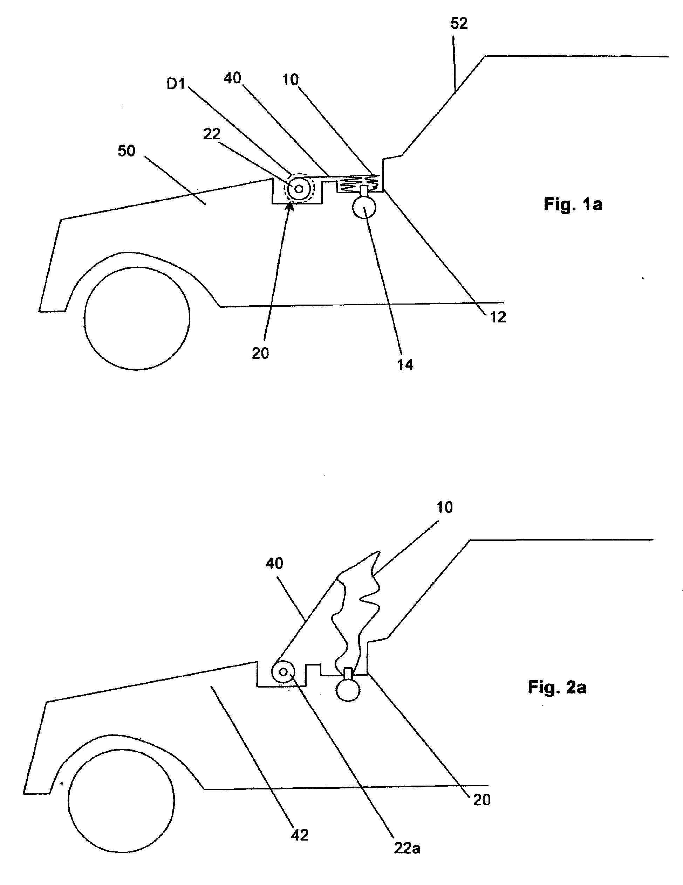

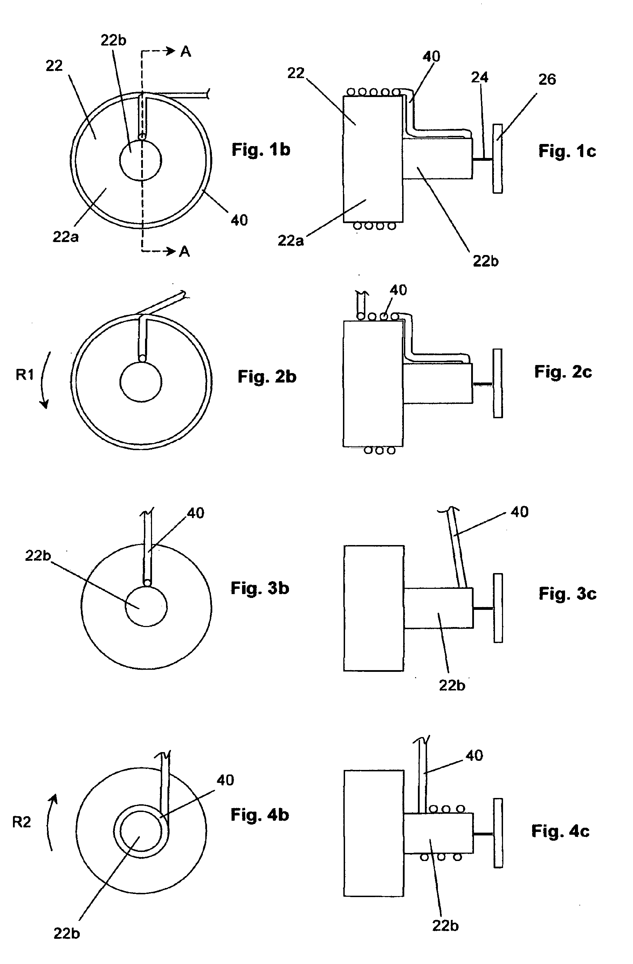

The Figures 1a to 4a show the front of a passenger car in a strongly diagrammed manner. Figures 1b to 4d show a part of a retractor, namely a spool, and a section of the strap connecting the spool with an airbag. Figures 1c to 4c are sectional views of what is shown in Figures 1b to 4b. Further, a constant force spring is shown in Figures 1c to 4c.

In the following reference is made to all the Figures 1a to 4c. As can best be seen in Figure 1a, the pedestrian airbag arrangement comprises an airbag 10 being located in a housing 12 and being in the fluid connection with an inflator, namely a gas generator 14. The housing 12 is placed at or under the bonnet 50 or in a gap between the windscreen 52 and the bonnet 50 in a known manner, such that on triggering of the gas generator 14, the airbag 10 inflates in front of the windscreen 52 and/or in front of at least one of the A-pillars. The arrangement of such an air-bag 10 is basically known in the art such that it does not need to be described in further details here. Additionally to the airbag 10 a retractor 20 is provided. This retractor 20 comprises a spool 22 being connected to a constant force spring 26 via an axle 24 (Figure 1 c). A first end of a strap 40 is connected to the airbag 10, the second end of this strap 40 is connected to the spool 22. This strap 40 serves as a pull element.

As can best be seen in Figures 1b to 4c, the spool 22 has two sections, namely a first section 22a and a second section 22b, wherein the diameter of the first section 22a is larger than the diameter of the second section 22b. Preferably the diameter of the first section 22a is at least three times the diameter of the second section 22b. As can also best be seen from Figures 1b to 4c, the second end of strap 40 is connected to the second section 22b of the spool 22. As can be seen from the Figures 1a, 1b and 1c, an end section of the strap 40 is wound onto the first section 22a of the spool 22 when the airbag 10 is in its undeployed resting state and folded into its housing 12. In this state the constant force spring 26 is not loaded or it is biased to some extend such that a section of the strap extending between the spool 22 and the airbag 10 is under some tension - preferably the spring 26 is almost fully pre-loaded. Both is possible and which possibility is chosen depends on factors like geometry, capacity of the airbag, size of the gas generator and the like.

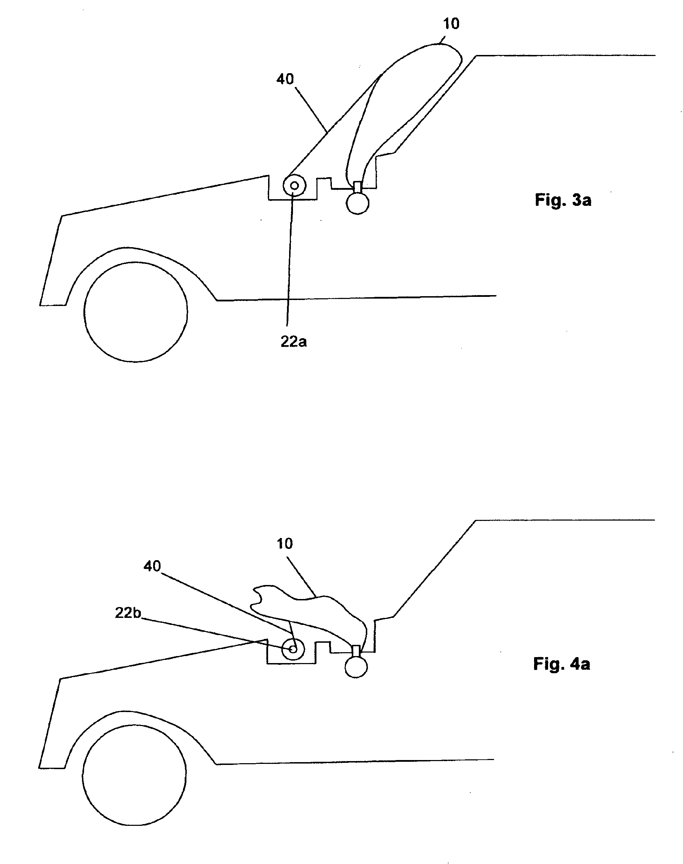

When the gas generator 14 is triggered, the airbag 10 unfolds and deploys out of its housing (Figure 2a) until it reaches its fully deployed state as is shown in Figure 3a. During this deployment the strap 40 unwinds from the first section 22a of the spool 22, turning the spool 22 in a first direction R1 and loading the constant force spring 26. After the strap 40 has completely unwound from the first section 22a the strap 40 "jumps" to the section 22b of the spool 22 to which the second end of the strap is connected, as is shown in Figures 3b and 3c. Usually, the geometry is chosen such that this passing over from the first section 22a to the second section 22b occurs when the airbag 10 is completely deployed as is shown in Figure 3a. Because of the smaller diameter of the second section 22b compared to the diameter of the first section 22a the force applied to the strap 40 rises. If for example the diameter of the second section 22b is a third of the diameter of the first section 22a, the force applied to the strap 40 rises by a factor three. This rising of the force is strong enough to begin with the retraction of the airbag 10 even if the pressure inside the airbag 10 is still rather high (Figure 4a). During the retraction the constant force spring 26 unloads and the spool rotates in the direction R2 opposite to the direction R1.

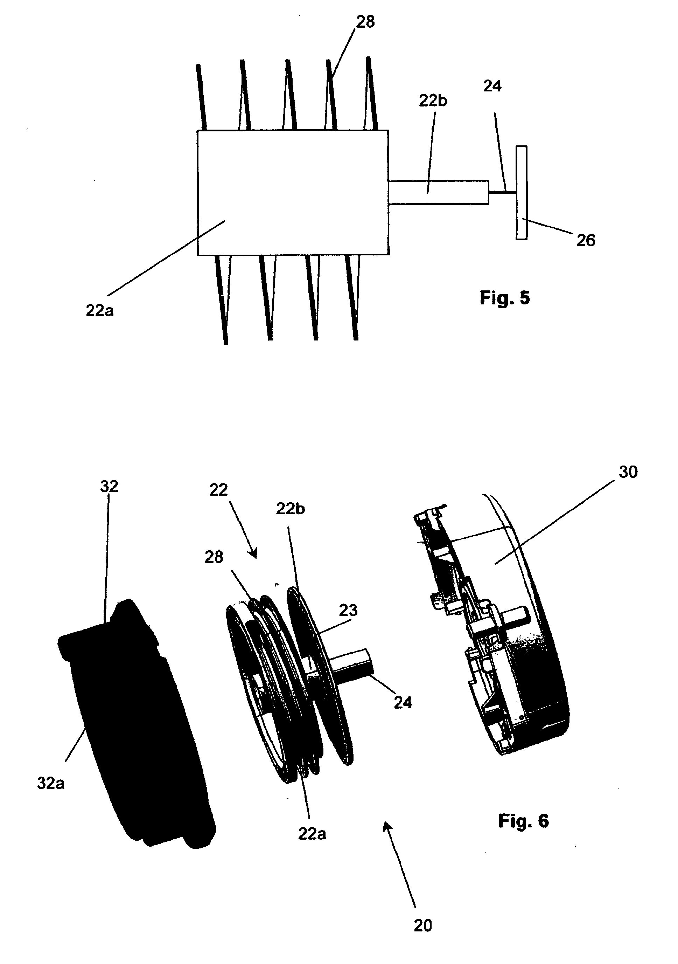

In order to provide a more controlled and reliable unwinding behaviour from the first section 22a, it is preferred (as is shown in Figure 5) to provide a guiding means which especially can be in form of a screw 28 extending from the outer surface of the first section 22a of the spool 22. This screw 28 ensures a correct winding of the strap 40 onto the first direction 22a and thus a correct unwinding from this first section 22a. A further advantage of a guiding means in form of a screw 28 is that it ensures that a passing over of the strap from the first section 22a to the second section 22b is not reversible. This is a big advantage since it is of course necessary that the strap 40 remains onto the second section 22b during the retraction of the airbag in order to keep the force level high.

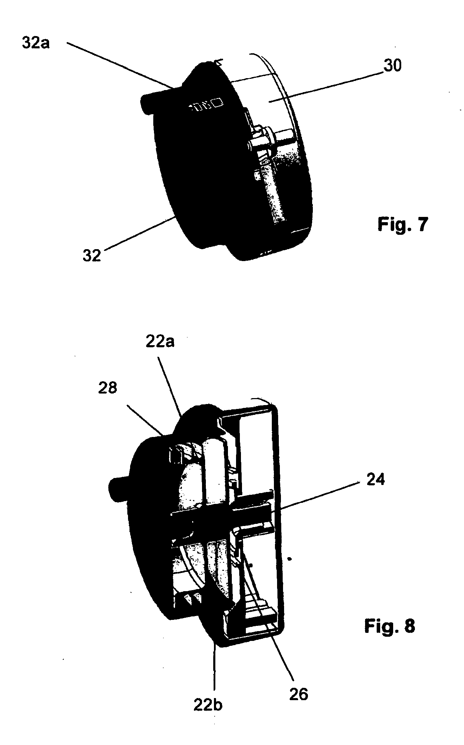

The Figures 6 to 8 show an embodiment of a retractor 20 in more details. One can see that the spool 22 has basically the same structure as the spool shown in Figure 5. Additionally, an end wall 23 is provided. The constant force spring 26 is located in a spring cassette 30 into which the axle 24 projects. The spool 22 is accommodated in a cover 32 which shows an aperture 32a through which the strap 40 extends (not shown in Figures 6 to 8). This retractor 20 can be connected to the housing 12 of the airbag 10 or to an other vehicle fixed part.

The process of assembly of the airbag arrangement is preferably done in the following way: First, the strap which is connected to the retractor is pulled out to its maximum such that the spring becomes maximum pre-stressed. In this state the strap is locked by a mounting fixture. Second, the strap is connected to the airbag and the airbag and the strap are folded to become a tight package. Finally, the mounting fixture is removed so that the existing strap slack between the retractor and the folded airbag is winded-in (i.e. the spring element becomes a little less pre-stressed). During the deployment of the airbag this strap is once again pulled out to its maximum, i.e. loading the spring element.

Although not shown in the figures, one further advantage of the described passive retraction system of the passenger airbag needs to be mentioned: The complete airbag arrangement can easily be mounted to the hood of the vehicle, since no wiring is necessary. Due to the fact that the hood needs to be movable relative to the car body, the wiring of a part fixed to the hood is more complex than the wiring of a part fixed to the car body. The mounting of the pedestrian airbag arrangement to the hood can especially be advantageous if a hood lifter is present.

### List of reference numbers

- 10: airbag
- 12: housing
- 14: gas generator
- 20: retractor
- 22: spool
- 22a: first section
- 22b: second section
- 23: end wall
- 24: axle
- 26: constant force spring
- 28: screw
- 30: spring cassette
- 32: cover
- 32a: aperture
- 40: strap
- 50: bonnet
- 52: windscreen

## Claims

1. Pedestrian airbag arrangement for a vehicle,
said pedestrian airbag arrangement comprising
an airbag (10) covering at least a part of the windscreen (52) and/or at least a part of at least one A-pillar of the vehicle when in deployed state,
an inflator (14) being in fluid connection to said airbag (10),
a retractor (20) for retracting said airbag (10), said retractor (20) comprising a spool (22) being connected to a spring element, and
a flexible pull element (40) having two ends with the first end being connected to the airbag (10) and the second end being connected to the spool (22), wherein in the non-deployed state of the airbag (10) a part of the pull element (40) is wound onto the spool (22), such that the spool (22) is rotated by the unwinding pull element when the airbag (10) deploys whereby loading the spring element, and wherein the pull element (40) pulls away the airbag (10) from the windscreen (52) and/or the at least one A-pillar when the pull element (40) is rewound onto the spool (22) because of the force of the spring element,
**characterised in that**
the spool (22) has at least two sections with a first section (22a) having a larger diameter than the second section (22b), wherein the pull element (40) is wound onto the spool (22) in such a way that the unwinding on deployment starts at the first section (22a) and that after a predetermined unwinding length the pull element passes over to the second section (22b) of the spool (22) so that the force applied to the pull element rises.

2. Pedestrian airbag arrangement according to claim 1, **characterised in that** the passing over from the first section (22a) to the second section (22b) is irreversible.

3. Pedestrian airbag arrangement according to claim 1 or claim 2, **characterised in that** there is a sharp step between the first section (22a) and the second section (22b).

4. Pedestrian airbag arrangement according to one of the preceding claims, **characterised in that** a guiding means is present guiding the pull element (40) from the first section (22a) to the second section (22b) of the spool (22) when the pull element (40) unwinds from the spool (22).

5. Pedestrian airbag arrangement according to claim 4, **characterised in that** the guiding means is a screw (28) extending coaxially from the first section (22a) of the spool (22).

6. Pedestrian airbag arrangement according to one of the preceding claims, **characterised in that** the length of the pull element (40) is chosen such that the pull element (40) passes over from the first section (22a) to the second section (22b) of the spool (22) when the maximum expansion of the airbag (10) is reached so that the retracting starts at this point in time.

7. Pedestrian airbag arrangement according to one of the preceding claims, **characterised in that** the diameter of the first section (22a) is at least three times larger than the diameter of the second section (22b).

8. Pedestrian airbag arrangement according to one of the preceding claims, **characterised in that** it is mounted to the hood of the vehicle.

9. Pedestrian airbag arrangement according to one of the preceding claims, **characterised in that** the spring element is pre-loaded in the resting state of the airbag arrangement.

## Patentansprüche

1. Fußgängerairbag-Anordnung für ein Fahrzeug,
wobei die Fußgängerairbag-Anordnung Folgendes umfasst:
einen Airbag (10), der mindestens einen Teil der Windschutzscheibe (52) und/oder mindestens einen Teil von mindestens einer A-Säule des Fahrzeugs bedeckt, wenn er sich im entfalteten Zustand befindet,
einen Gasgenerator (14), der eine Fluidverbindung zu dem Airbag (10) aufweist,
einen Einzug (20) zum Zurückziehen des Airbags (10), wobei der Einzug (20) eine Rolle (22) umfasst, die mit einem Federelement verbunden ist, und
ein flexibles Zugelement (40) mit zwei Enden, wobei das erste Ende mit dem Airbag (10) verbunden ist und das zweite Ende mit der Rolle (22) verbunden ist, wobei ein Teil des Zugelements (40) in dem nicht entfalteten Zustand des Airbags (10) derart auf die Rolle (22) gewickelt ist, dass sich die Rolle (22) durch das sich abwickelnde Zugelement dreht, wenn sich der Airbag (10) entfaltet, wodurch das Federelement gespannt wird, und wobei das Zugelement (40) den Airbag (10) von der Windschutzscheibe (52) und/oder der mindestens einen A-Säule wegzieht, wenn das Zugelement (40) aufgrund der Kraft des Federelements wieder auf die Rolle (22) gewickelt wird,
dadurch ekennzeichnet, dass
die Rolle (22) mindestens zwei Abschnitte aufweist, wobei ein erster Abschnitt (22a) einen größeren Durchmesser als der zweite Abschnitt (22b) aufweist, wobei das Zugelement (40) derart auf die Rolle (22) gewickelt ist, dass das Abwickeln beim Entfalten am ersten Abschnitt (22a) beginnt, und dass nach einer vorher festgelegten Abwickellänge das Zugelement auf den zweiten Abschnitt (22b) der Rolle (22) wechselt, sodass die auf das Zugelement ausgeübte Kraft zunimmt.

2. Fußgänger-Airbaganordnung nach Anspruch 1, **dadurch gekennzeichnet, dass** der Wechsel von dem ersten Abschnitt (22a) auf den zweiten Abschnitt (22b) unumkehrbar ist.

3. Fußgänger-Airbaganordnung nach Anspruch 1 oder Anspruch 2, dadurch ekennzeichnet, dass zwischen dem ersten Abschnitt (22a) und dem zweiten Abschnitt (22b) ein ausgeprägter Absatz vorhanden ist.

4. Fußgänger-Airbaganordnung nach einem der vorhergehenden Ansprüche, **dadurch gekennzeichnet, dass** ein Führungsmittel vorhanden ist, das das Zugelement (40) von dem ersten Abschnitt (22a) zu dem zweiten Abschnitt (22b) der Rolle (22) führt, wenn sich das Zugelement (40) von der Rolle (22) abwickelt.

5. Fußgänger-Airbaganordnung nach Anspruch 4, **dadurch gekennzeichnet, dass** das Führungsmittel eine Schnecke (28) ist, die koaxial von dem ersten Abschnitt (22a) der Rolle (22) aus verläuft.

6. Fußgänger-Airbaganordnung nach einem der vorhergehenden Ansprüche, **dadurch gekennzeichnet, dass** die Länge des Zugelements (40) so gewählt ist, dass das Zugelement (40) von dem ersten Abschnitt (22a) auf den zweiten Abschnitt (22b) der Rolle (22) wechselt, wenn die maximale Ausdehnung des Airbags (10) erreicht ist, sodass das Zurückziehen zu diesem Zeitpunkt beginnt.

7. Fußgänger-Airbaganordnung nach einem der vorhergehenden Ansprüche, **dadurch gekennzeichnet, dass** der Durchmesser des ersten Abschnitts (22a) mindestens dreimal größer als der Durchmesser des zweiten Abschnitts (22b) ist.

8. Fußgänger-Airbaganordnung nach einem der vorhergehenden Ansprüche, **dadurch gekennzeichnet, dass** sie an der Motorhaube des Fahrzeugs montiert ist.

9. Fußgänger-Airbaganordnung nach einem der vorhergehenden Ansprüche, **dadurch gekennzeichnet, dass** das Federelement im Ruhezustand der Airbaganordnung vorgespannt ist.

## Revendications

1. Agencement d'airbag pour piétons destiné à un véhicule,
ledit agencement d'airbag pour piétons comprenant
un airbag (10) recouvrant quand il est dans l'état déployé au moins une partie du pare-brise (52) et/ou au moins une partie d'au moins un montant A du véhicule,
un gonfleur (14) qui est en liaison fluidique avec ledit airbag (10),
un rétracteur (20) pour rétracter ledit airbag (10), ledit rétracteur (20) comprenant une bobine (22) qui est raccordée à un élément de ressort, et
un élément de traction flexible (40) présentant deux extrémités avec la première extrémité raccordée à l'airbag (10) et la seconde extrémité raccordée à la bobine (22), dans lequel, dans l'état non déployé de l'airbag (10), une partie de l'élément de traction (40) est enroulée sur la bobine (22), de sorte que l'élément de traction se déroulant fait tourner la bobine (22) quand l'airbag (10) se déploie, ce par quoi l'élément de ressort est tendu, et dans lequel l'élément de traction (40) tire l'airbag (10) en l'éloignant du pare-brise (52) et/ou de l'au moins un montant A quand l'élément de traction (40) est réenroulé sur la bobine (22) en raison de la force de l'élément de ressort,
**caractérisé en ce que**
la bobine (22) présente au moins deux sections avec une première section (22a) présentant un diamètre supérieur à la seconde section (22b), dans lequel l'élément de traction (40) est enroulé sur la bobine (22) de telle manière que le déroulement lors du déploiement démarre à la première section (22a) et qu'après une longueur de déroulement prédéterminée, l'élément de traction passe à la seconde section (22b) de la bobine (22) de sorte que la force appliquée sur l'élément de traction augmente.

2. Agencement d'airbag pour piétons selon la revendication 1, **caractérisé en ce que** le passage de la première section (22a) à la seconde section (22b) est irréversible.

3. Agencement d'airbag pour piétons selon la revendication 1 ou la revendication 2, **caractérisé en ce qu'**il y a un changement de niveau abrupt entre la première section (22a) et la seconde section (22b).

4. Agencement d'airbag pour piétons selon l'une des revendications précédentes, **caractérisé en ce qu'**il y a un moyen de guidage guidant l'élément de traction (40) de la première section (22a) à la seconde section (22b) de la bobine (22) quand l'élément de traction (40) se déroule de la bobine (22).

5. Agencement d'airbag pour piétons selon la revendication 4, **caractérisé en ce que** le moyen de guidage est une vis (28) s'étendant de la première section (22a) de la bobine (22) de manière coaxiale.

6. Agencement d'airbag pour piétons selon l'une des revendications précédentes, **caractérisé en ce que** la longueur de l'élément de traction (40) est choisie de façon à ce que l'élément de traction (40) passe de la première section (22a) à la seconde section (22b) de la bobine (22) quand l'expansion maximale de l'airbag (10) est atteinte de sorte que la rétraction démarre à ce moment.

7. Agencement d'airbag pour piétons selon l'une des revendications précédentes, **caractérisé en ce que** le diamètre de la première section (22a) est au moins trois fois plus grand que le diamètre de la seconde section (22b).

8. Agencement d'airbag pour piétons selon l'une des revendications précédentes, **caractérisé en ce qu'**il est monté sur le capot du véhicule.

9. Agencement d'airbag pour piétons selon l'une des revendications précédentes, **caractérisé en ce que** l'élément de ressort est pré-tendu dans l'état de repos de l'agencement d'airbag.
